# EUROPÄISCHE PATENTSCHRIFT

(11) **EP 0 737 377 B1**
(45) Veröffentlichungstag und Bekanntmachung des Hinweises auf die Patenterteilung: **24.06.1998**
(21) Anmeldenummer: 94913501.6
(22) Anmeldetag: 19.04.1994
(51) Int. Cl.: H02B 11/24

(54) **ARBEITSSCHUTZVORRICHTUNG FÜR EIN ELEKTRISCHES SCHALTFELD**
PROTECTIVE DEVICE FOR AN ELECTRIC SWITCHGEAR PANEL
DISPOSITIF DE PROTECTION POUR TABLEAUX ELECTRIQUES

(30) Priorität: 21.04.1993 DE 4313652
(43) Veröffentlichungstag der Anmeldung: 16.10.1996
(73) Patentinhaber: SIEMENS AKTIENGESELLSCHAFT, 80333 München (DE)
(72) Erfinder: MÜLLER, Rolf, D-63785 Obernburg (DE); GRONEMANN, Karl-Heinz, D-63128 Dietzenbach (DE); MOSLER, Thomas, D-60594 Frankfurt am Main (DE)
(86) Internationale Anmeldenummer: DE9400515
(87) Internationale Veröffentlichungsnummer: WO9424744

(56) Entgegenhaltungen:
- DE-U- 8 624 915
- DE-U- 9 003 117
- FR-A- 1 478 398
- POWER ENGINEERING & AUTOMATION, Bd.7, Nr.3, Juni 1985, ERLANGEN Seiten 146 - 163 WILKE LÜBBEN ET AL. 'Air-Insulated, Withdrawable Circuit-Breaker Switchgear, Type Tested to IEC 298'

## Beschreibung

Die Erfindung betrifft eine Arbeitsschutzvorrichtung für ein elektrisches Schaltfeld mit einem ein- und ausfahrbar angeordneten Gerät und mit in dem Schaltfeld ortsfest angeordneten Trennkontakten sowie an dem Gerät angeordneten bewegbaren Trennkontakten mit folgenden Merkmalen:
- eine aus gelenkig miteinander verbundenen Teilstücken bestehende Arbeitsschutzplatte,
- eine an der Bedienungsfront des Schaltfeldes angeordnete Einführungsöffnung für die Arbeitsschutzplatte,
- sich an die Einführungsöffnung anschließende, die seitlichen Ränder der Arbeitschutzplatte durch im Abstand voneinander angeordnete Führungsschenkel erfassende Führungsmittel, umfassend sich etwa über die Tiefe des Gerätes erstreckende gerade Führungschienen und an die geraden Führungsschienen anschließende, abgewinkelte Führungsschienen solcher Länge und Gestalt, daß die Arbeitschutzplatte zwischen die ortsfesten und bewegbaren Trennkontakte einführbar ist.

Eine Arbeitsschutzvorrichtung mit diesen Merkmalen ist durch die Unterlagen des DE-GM 86 24 915 bekanntgeworden. In diesem Dokument sind mehrere bekannte Ausführungsformen von Arbeitsschutzplatten beschrieben, darunter eine solche mit durch Metallscharnieren verbundenen Isolierstoffplatten und eine weitere Ausführungsform, bei der zwei dünne biegsame Isolierplatten von der Gesamtlänge der Arbeitsschutzplatte zusammengelegt sind und dadurch keine Scharniere benötigt werden.

Beide vorstehend erwähnten bekannten Ausführungen von Arbeitsschutzplatten können jedoch nicht alle in den Schaltanlagen auftretenden Schutzaufgaben erfüllen. Während Metallscharniere die Spannungsfestigkeit der Arbeitsschutzvorrichtung begrenzen, können bei biegsamen Isolierstoffplatten Beschränkungen durch die Materialeigenschaften auftreten.

Desweiteren ist aus der DE-U-90 03 117 eine isolierende Schutzplatte mit einem einzigen gegenüber einem verbliebenden Teil abwinkelbaren Teilbereich bekannt. Der abwinkelbare Teil ist mit dem verbleibenden Teil durch ein aus weichelastischen Kunststoff gebildetes Scharnier verbunden. Diese Art Schutzplatte ist wegen der geringen Neigungsfähigkeit nur für relativ geradlinige Abdeckungen geeignet.

Auch die aus Power Engeneering & Automation, Band 7, Nr. 3, Juni 1985, Figur 2 und aus FR-A-1 478 398 bekannten Arbeitsschutzvorrichtung neigen hinsichtlich ihrer Gleit- und Führungseigenschaften leicht zum Verkanten.

Der Erfindung liegt ausgehend von einer Arbeitsschutzvorrichtung der eingangs genannten Art und den vorstehend erwähnten Eigenschaften der bekannten Arbeitsschutzplatten die Aufgabe zugrunde, die Arbeitsschutzvorrichtung insbesondere hinsichtlich der Arbeitsschutzplatten zu verbessern. Darüber hinaus sollen auch die handhabungstechnischen und montagetechnischen Eigenschaften der Arbeitsschutzvorrichtung verbessert werden, um ein hohes Maß von Sicherheit mit kostengünstiger Gestaltung zu verbinden.

Gemäß der Erfindung wird diese Aufgabe durch folgende weitere Merkmale gelöst:
- die gelenkige Verbindung der Teilstücke der Arbeitsschutzplatte wird durch ein die Enden der zu verbindenden Teilstücke übergreifendes einstückiges elastomeres Gelenkstück gebildet, - das Gelenkstück besitzt für jedes der zu verbindenden Teilstücke einen U-Profilabschnitt und einen die Gelenkverbindung bildenden, sich über die gesamte Breite der Teilstücke erstreckenden unterbrechungslosen Steg.

Hierdurch wird erreicht, daß die Gelenkverbindungen elektrisch nichtleitend sind und daher keine Ansatzpunkte für Teilentladungen bilden können. Da sich die Gelenkstücke über die gesamte Breite der Isolierstoffplatten erstrecken, wirken die Enden der Gelenkstücke als Führungsklötze in den Führungsschienen. Diese Eigenschaft erleichtert das Einschieben und Herausnehmen der Arbeitsschutzplatte.

Auf die Gelenkigkeit bzw. Biegsamkeit der Arbeitsschutzplatte wirkt es sich günstig aus, wenn die Dicke des Steges nur einen Teil der Dicke des Gelenkstückes beträgt und wenn der Steg wenigstens auf einer Seite mit einer Abrundung in die U-Profilabschnitte übergeht.

Besonders günstige Eigenschaften kann die die Arbeitsschutzvorrichtung dadurch erhalten, daß das Gelenkstück aus einem Elasto-Silan (Silikon-Kautschuk) besteht und daß die U-Profilabschnitte flächenhaft mit den Isolierstoffplatten verklebt sind. Der genannte Werkstoff ist elektrisch hochwertig, alterungsbeständig und verfügt über eine vorteilhaft ausgeprägte Biegsamkeit. Ferner eignet sich die angegebene Profilform der Gelenkstücke für eine Endlos-Herstellung. Daher können unterschiedlich breite Arbeitsschutzplatten auf einfache Weise hergestellt werden.

Trotz einer geringen Anzahl von Gelenkstücken kann sowohl eine gute Anpassung an die gewünschte Kontur der Arbeitsschutzvorrichtung als auch eine unkomplizierte Gestalt der abgewinkelten Führungsschienen erzielt werden. Dies kann nach einer Ausgstaltung der Erfindung dadurch geschehen, daß die Arbeitsschutzplatte drei durch Gelenkstücke verbundene Teilstücke aufweist und daß die abgewinkelten Führungschienen vier winklig zueinander stehende Abschnitte umfassen, derart, daß bei in das Schaltfeld eingeführter Arbeitsschutzplatte sich das eine Gelenkstück nahe dem Übergang von dem ersten Abschnitt zu dem zweiten Abschnitt und das weitere Gelenkstück im Bereich des dritten Abschnittes befindet.

Das eine der Teilstücke der Arbeitsschutzplatte kann aus Metall bestehen und seitlich überstehende Anschlagnasen zur Abstützung an der Bedienungsfront des Schaltfeldes besitzen , wobei die eine der Anschlagnasen eine Schließnase mit einer Aufnahmeöffnung für ein Sperrorgan aufweist. Hierdurch kann die Arbeitsschutzplatte gegen Entfernung gesichert werden.

Es ist nicht erforderlich, wie bisher üblich, gesonderte linke und rechte Führungsschienen anzufertigen. Nach einer Ausgestaltung der Erfindung können nämlich die Abschnitte der abgewinkelten Führungsschiene ein symmetrisches I-Profil mit örtlich derart angepaßter Weite der Führungsschenkel besitzen, daß das mittlere Teilstück der Arbeitsschutzplatte durch den Knick am Übergang von dem zweiten Abschnitt der abgewinkelten Führungschiene zu dem dritten Abschnitt unterstützt wird. Diese Wirkung ist unabhängig von der Montage der Führungschiene an der linken oder der rechten Seite eines Schaltfeldes.

Ein zuverlässiger Personenschutz erfordert es, die Arbeitsschutzplatte an ihrer Bedienungsseite zu erden. Auch soll vermieden werden, daß im Fehlerfall Gase aus dem frontseitigen Einführungsschlitz für die Arbeitsschutzplatte austreten können. Diese Maßnahme kann dadurch erleichtert werden, daß die geraden Führungschienen Bestandteil einer mit der Innenseite der Bedienungsfront der Schaltanlage verbindbaren, aus Stahlblech bestehenden Führungskassette sind, die Scharniergelenke für eine die frontseitige Einführungsöffnung für die Arbeitsschutzplatte verdeckende und zum Öffnen und Schließen schwenkbare Verschlußklappe besitzt. Der Schutz einer Bedienungsperson kann noch dadurch verbessert werden, daß die Führungskassette eine im Führungsweg schwenkbar angeordnete und beim Einführen der Arbeitsschutzplatte gegen Federkraft umlegbare Schutzklappe enthält.

Durch die Einführung des aus Metall bestehenden bedienungsseitigen Endteiles der Arbeitsschutzplatte in die Führungskassete wird bereits eine Erdung erreicht. Um diese jedoch von der jeweiligen Handhabung der Arbeitsschutzplatte unabhängig zu machen, empfiehlt es sich, an der Schutzklappe wenigstens eine elektisch leitfähige Rolle anzubringen, die beim Einführen der Arbeitsschutzplatte mit dieser zusammenwirkt.

Um den Übertritt der Arbeitsschutzplatte von den geraden Führungsschienen in die abgewinkelten Führungsschienen zu erleichtern, können die in der Führungskassette enthaltenen geraden Führungsschienen zur Auflage der Arbeitsschutzplatte über die rückseitige Öffnung der Führungskassette mit einer Abwinklung überstehend angeordnet sein und der obere rückseitige Rand der Führungskassette eine entgegengesetze Abwinklung besitzen, wobei die Maulweite der Abwinklungen der inneren Weite der Führungsschenkel der abgewinkelten Führungsschienen entsprechend bemessen ist.

Die Erfindung wird im folgenden anhand des in den Figuren dargestellten Beispieles näher erläutert.

Die Figur 1 zeigt ein Feld einer Mittelspannungsschaltanlage in einer Frontansicht.

In der Figur 2 ist das Schaltfeld gemäß der Figur 1 in einer Seitenansicht mit abgenommener Abdeckung gezeigt.

Die Figur 3 zeigt eine Arbeitsschutzplatte in gestreckter Lage. Eine Einzelheit der Arbeitsschutzplatte gemäß der Figur 3 zeigt die Figur 4 in vergrößerter Darstellung.

Die Figur 5 zeigt eine abgewinkelte Führungsschiene in einer Seitenansicht.

Die Figuren 6 und 7 zeigen die Querschnittsform der abgewinkelten Führungsschiene gemäß der Figur 5 an zwei verschiedenen Stellen.

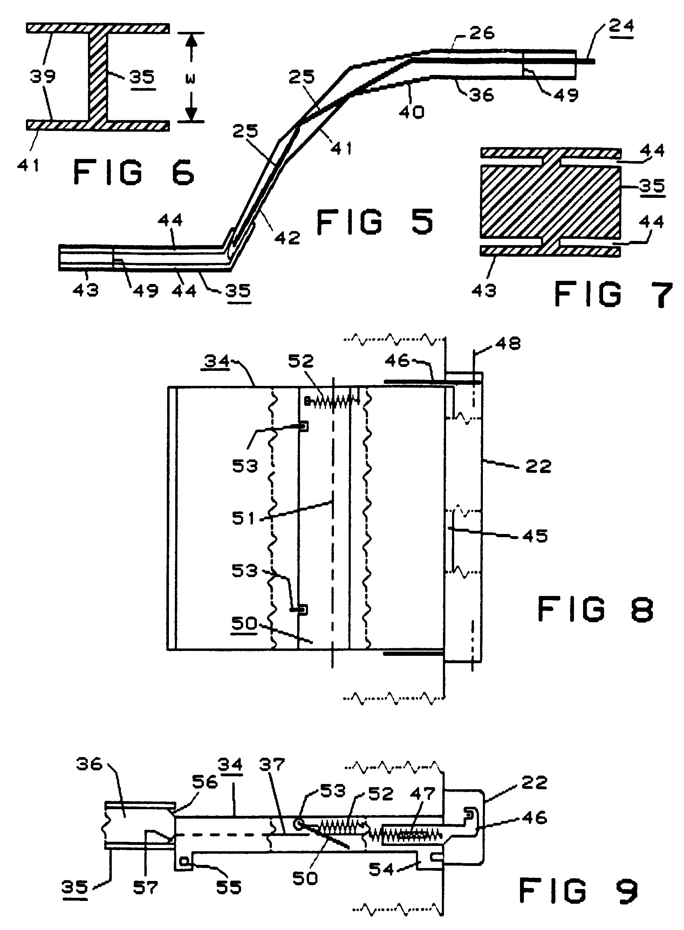

Eine Führungskassette für eine Arbeitschutzplatte ist in der Figur 8 in der Draufsicht und in der Figur 9 von der Seite dargestellt.

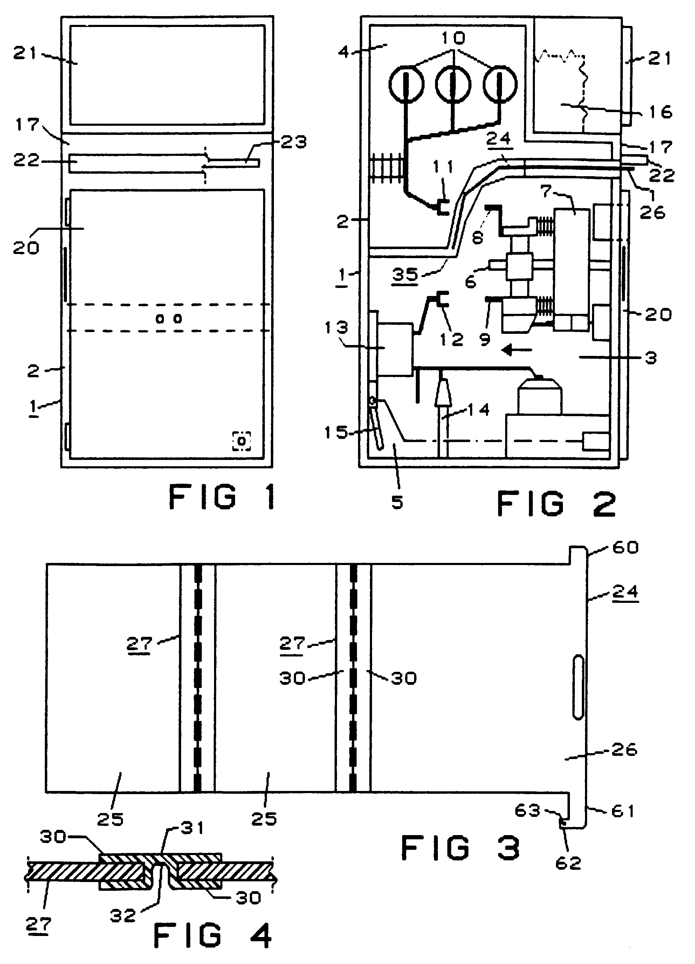

Ein in der Figur 1 von vorn und in der Figur 2 von der Seite gezeigtes Mittelspannungs-Schaltfeld 1 besitzt ein Gehäuse 2 mit einem Schalterraum 3, einem Sammelschienenraum 4 und einem Kabelanschlußraum 5. Im Schalterraum 3 befindet sich ein an Fahrschienen 6 verfahrbarer Vakuum-Leistungsschalter 7, der obere und untere bewegbare Trennkontakte 8 und 9 besitzt. In dem Sammelschienenraum 4 sind einspeisende Sammelschienen 10 angeordnet, die mit oberen ortsfesten Trennkontakten 11 verbunden sind. Untere ortsfeste Trennkontakte 12 sind unter Zwischenschaltung von Stromwandlern 13 mit Kabeln 14 verbunden, die in nicht näher dargestellter Weise nach unten aus dem Schaltfeld 1 herausgeführt sind. Unterhalb der Stromwandler 13 befindet sich ein Erdungsschalter 15, der die Erdung der Kabel 14 gestatet, wenn sich der Leistungsschalter 7 in der dargestellten Trennstellung befindet.

Das Gehäuse 2 enthält ferner einen Niederspannungsraum 16, der sich oberhalb des Schalterraumes 3 befindet und der von den übrigen Räumen durch Wände vollständig abgeschlossen ist. Der Niederspannungsraum 16 dient zur Unterbringung von Steuer-, Schutz- und Anzeigegeräten für den Leistungsschalter 7.

An einer Bedienungsfront 17 des Schaltfeldes 1 befindet sich eine Tür 20 für den Schalterraum 3 und eine darüber angeordnete Tür 21 für den Niederspannungsraum 16. Ferner ist zwischen den Türen 20 und 21 eine Verschlußklappe 22 angeordnet, durch die im normalen Betrieb des Schaltfeldes 1 eine Einführungsöffnung 23 abgedeckt wird, die zum Einschieben einer noch zu beschreibenden Arbeitsschutzplatte 24 dient, die in der Figur 2 gezeigt ist. Die Arbeitsschutzplatte 24 ist Bestandteil einer Arbeitsschutzvorrichtung, auf die nun näher eingegangen wird.

Wie schon erwähnt, ist der Leistungsschalter 7 in dem Schalterraum 3 verfahrbar angeordnet. Auf diese Weise kann der Leistungsschalter 7 ausgehend von der gezeigten Trennstellung bei entfernter Arbeitsschutzplatte 24 in eine Betriebsstellung gebracht werden, in der die oberen beweglichen Trennkontakte 8 in Eingriff mit den gegenüberstehenden ortsfesten Trennkontakten 11 stehen und sinngemäß die unteren bewegbaren Trennkontakte 9 mit den unteren ortsfesten Trennkontakten 12. In diesem Zustand wird in bekannter Weise dafür gesorgt, daß die Tür 21 nicht geöffnet werden kann.

Befindet sich der Leistungschalter 7 dagegen in der in der Figur 2 gezeigten Trennstellung, so ist die Verbindung mit den Sammelschienen 10 unterbrochen. Es kann daher im Kabelanschlußraum 5 gearbeitet werden, sofern für Spannungsfreiheit auch der Kabel gesorgt worden ist. Voraussetzung für gefahrloses Arbeiten im Kabelanschlußraum 5 ist jedoch ein zuverlässiger Schutz gegen eine Berührung der Sammelschienen 10 und der unteren ortsfesten Trennkontakte 12. Dieser Schutz wird durch eine Arbeitschutzvorrichtung hergestellt, deren Aufbau nachfolgend näher erläutert wird.

Zu der Arbeitsschutzvorrichtung gehört die bereits erwähnte Arbeitschutzplatte 24, die in gestreckter Lage in der Figur 3 gezeigt ist. Die Arbeitsschutzplatte 24 besteht aus drei Teilstücken, von denen zwei Teilstücke 25 aus Isolierstoff bestehen, während ein weiteres frontseitiges Teilstück 26 aus Metall besteht, z.B. Aluminiumblech. Die drei Teilstücke sind durch Gelenkstücke 27 aus Silikon-Kautschuk verbunden, deren Profil näher der Figur 4 zu entnehmen ist. In dieser Figur ist die Verbindung der beiden Teilstücke 25 dargestellt. Das Gelenkstück 27 besitzt für jedes der Teilstücke 25 einen U-Profilabschnitt 30, der die Kanten der Teilstücke dicht anliegend übergreift. Beide U-Profilabschnitte 30 sind durch einen Steg 31 verbunden, der nur etwa die Dicke eines der Schenkel der U-Profilabschnitte 30 besitzt und auf einer Seite bündig mit den Schenkeln verläuft. Auf der anderen Seite geht der Steg 31 mit einer Abrundung 32 in die U-Profilabschnitte 30 über. Die Figur 3 zeigt ferner, daß sich die Gelenkstücke 27 einschließlich des Steges 31 ohne Unterbrechung über die gesamte Breite der Teilstücke 25 erstrecken. Ein die U-Profilabschnitte 30 mit den Teilstücken verbindendes Klebmittel 33 ist in der Figur 4 angedeutet. In der gezeigten Weise ist auch das aus Metall bestehende Teilstück 26 mit dem anschließenden Teilstück 25 verbunden. Alle Teilstücke sind somit scharnierartig verbunden, wobei jedoch keinerlei Metallteile vorhanden sind, an denen Teilentladungen ansetzen könnten.

Das aus Metall bestehende Teilstück 26 der Arbeitsschutzplatte 24 besitzt gemäß der Figur 3 an seiner Bedienungsseite zwei seitlich überstehende Anschlagnasen 60 und 61, die sich im eingeschobenen Zustand der Arbeitsschutzplatte gegen die Bedienungsfront 17 des Schaltfeldes 1 anlegen, wenn die Arbeitsschutzplatte 24 vollständig eingeschoben ist. Eine zusätzlich an der Anschlagnase 61 angfeformte Schließnase 62 kann dabei durch eine Öffnung in dem Gehäuse 2 hindurchgreifen. In dieser Lage kann, z.B. in Abhängigkeit von der Tür 20, ein Sperrorgan in eine Eingrifföffnung 63 der Schließnase eingeführt werden.

Zu der Arbeitsschutzvorrichtung in dem Schaltfeld 1 (Figuren 1 und 2) gehören neben der vorstehend beschriebenen Arbeitsschutzplatte 24 Führungsmittel, die insbesondere aus einer an der Bedienungsfront 17 (Figuren 1 und 2) zugänglichen Führungskassette 34 und zwei an diese anschließenden abgewinkelten Führungsschienen 35 bestehen, die als Einheitsteile links und rechts verwendbar sind. Einzelheiten der abgewinkelten Führungsschienen 35 zeigen die Figuren 5, 6 und 7. Jede Führungsschiene 35 umfaßt fünf Abschnitte, von denen ein erster gerader Abschnitt 36 zur Anfügung an eine in der Führungskassette 34 enthaltene gerade Führungsschiene 37 (Figur 9) vorgesehen ist. An den geraden Abschnitt 36 schließen sich drei winklig zueinander stehende Abschnitte 40, 41 und 42 an, die als Nachbildung etwa eines Viertelkreisbogens betrachtet werden können. Ein fünfter Abschnitt 43 ist wiederum gerade ausgebildet und liegt in einer zu dem ersten Abschnitt 36 parallelen Ebene.
Das Profil der Abschnitte 26, 40, 41 und 42 ist prinzipiell ähnlich und entspricht der in der Figur 6 gezeigten symmetrischen I-Form mit Führungsschenkeln 39, auf der die beliebige Verwendbarkeit der Führungsschiene 35 an der linken oder der rechten Seite des Gehäuses (Figuren 1 und 2) beruht. Jedoch ist die in der Figur 6 eingetragene Höhe w in den einzelnen genannten Abschnitten unterschiedlich und nimmt in der Reihenfolge ihrer Numerierung ab. Am unteren Ende des Abschnittes 42 wird die geringste Höhe h erreicht, die nur etwa der Dicke des Teilstückes 25 der Arbeitsschutzplatte 24 entspricht. Der untere gerade Abschnitt 43 der Führungsschiene 35 besitzt das in der Figur 7 gezeigte Profil. Dieses weist Nuten 44 auf, in die eine Schottwand einsetzbar ist, um eine teilweise Abschottung zwischen dem Sammelschienenraum 4 und dem Kabelanschlußraum 5 zu bewirken.

Die Abwinklungen sind so gewählt und die Weite w (Figur 6) derart bemessen, daß die Arbeitsschutzplatte 24 im eingeschobenen Endzustand gemäß der Figur 2 eine stabile Lage einnimmt. Dies geschieht dadurch, daß das zwischen den Teilstükken 25 und 26 befindliche Gelenkstück 27 nahe dem Übergang von dem Abschnitt 36 zu dem Abschnitt 40 anliegt, während das zwischen den beiden Teilstücken 25 befindliche Gelenkstück 27 an dem Abschnitt 42 anliegt. In dieser Position wird das mittlere Teilstück 25 durch den Knick am Übergang zwischen den Abschnitten 40 und 41 gestützt (Figuren 2 und 5). In der Figur 5 sind an den geraden Abschnitten 36 und 43 angebrachte Markierungen 49 gezeigt, die dazu dienen, die geraden Abschnitte maßgerecht kürzen zu können, wenn die Führungsschienen in Schaltfeldern mit geringerer Tiefe verwendet werden sollen. Zweckmäßig wird daher die Führungsschiene 35 in einer Standardausführung hergestellt, die sich lediglich durch Kürzung an alle herzustellenden Schaltfelder anpassen läßt.

Wie schon erwähnt, schließen sich die abgewinkelten Führungsschienen 35 an gerade Führungsschienen 38 an, die sich in einer Führungskassette 34 befinden, deren Gestaltung die Figuren 8 und 9 näher zeigen. Die aus Blech bestehende Führungskassette 34 bildet einen Kanal zum Hindurchschieben der Arbeitsschutzplatte 24. Frontseitig besitzt die Führungskassette 34 eine an den Rändern in die geraden Führungsschienen 38 übergehende Stirnleiste 45 als untere Begrenzung der Einführungsöffnung 23 (Figur 1). An den Schmalseiten der Führungskassette 34 ist je ein Scharnierhaken 46 verschiebbar geführt, der durch eine Feder 47 so vorgespannt ist, daß die Verschlußklappe 22 gegen die Bedienungsfront gedrückt wird. Um die in der Figur 8 angedeuteten Scharniergelenke 48 ist die Verschlußklappe 22 in eine ebenfalls stabile Öffnungsstellung schwenkbar. Im Inneren enthält die Führungskassette 34 eine schwenkbare Schutzklappe 50, die um eine außermittige Drehachse 51 schwenkbar ist. Durch eine Feder 52 wird die Schutzklappe 50 in die dargestellte Schräglage vorgespannt. Zwei an der Oberkante angebrachte Rollen 53 erleichtern das Einführen der Arbeitsschutzplatte 24 und gewährleisten zugleich die Erdung des aus Metall bestehenden ersten Teilstükkes 26 (Figur 4). Zur Befestigung der Führungskassette 34 in dem Gehäuse 9 sind an beiden Schmalseiten je eine vordere Einstecklasche 54 und eine hintere Haltelasche 55 vorgesehen. Am hinteren Ende der Führungskassette 34 ist der obere Rand 56 nach oben abgewinkelt ausgebildet. Im entgegengesetzten Sinn sind die überstehenden Enden der geraden Führungschienen 37 abgewinkelt. Die Maulweite dieser Anordnung entspricht der Weite w der abgewinkelten Führungsschiene 35. Hierdurch wird erreicht, daß die Arbeitsschutzplatte 24 frei, d.h. ohne Berührung mit den Schenkeln des I-Profils der abgewinkelten Führungsschiene 35 in den ersten Abschnitt 36 eintreten kann und dadurch ein geringer Bewegungswiderstand ohne Verkantungsgefahr erzielt wird.

## Patentansprüche

1. Arbeitsschutzvorrichtung für ein elektrisches Schaltfeld (1) mit einem ein- und ausfahrbar angeordneten Gerät (7) und mit in dem Schaltfeld (1) ortsfest angeordneten Trennkontakten (11,12) sowie an dem Gerät (7 angeordneten bewegbaren Trennkontakten (8,9) mit folgenden Merkmalen:
- eine aus gelenkig miteinander verbundenen Teilstücken (25,26) bestehende Arbeitsschutzplatte (24),
- eine an der Bedienungsfront (17) des Schaltfeldes (1) angeordnete Einführungsöffnung (23) für die Arbeitsschutzplatte (24),
- sich an die Einführungsöffnung (23) anschließende, die seitlichen Ränder der Arbeitschutzplatte (23) durch im Abstand voneinander angeordnete Führungsschenkel (39) erfassende Führungsmittel (34,35), umfassend sich etwa über die Tiefe des Gerätes (7) erstreckende gerade Führungschienen (37) und an die geraden Führungsschienen (37) anschließende, abgewinkelte Führungsschienen (35) solcher Länge und Gestalt, daß die Arbeitschutzplatte (24) zwischen die ortsfesten und bewegbaren Trennkontakte (11,12;8,9) einführbar ist,
**gekennzeichnet durch** folgende weitere Merkmale:
- die gelenkige Verbindung der Teilstücke (25,26) der Arbeitsschutzplatte (24) wird durch ein die Enden der zu verbindenden Teilstücke (25,26) übergreifendes einstückiges elastomeres Gelenkstück (27) gebildet,
- das Gelenkstück (27) besitzt für jedes der zu verbindenden Teilstücke (25,26) einen U-Profilabschnitt (30) und einen die Gelenkverbindung bildenden, sich über die gesamte Breite der Teilstücke (25,26) erstreckenden unterbrechungslosen Steg (31).

2. Arbeitsschutzvorrichtung nach Anspruch 1,
**dadurch gekennzeichnet, daß**
die Dicke des Steges (31) nur einen Teil der Dicke des Gelenkstückes (27) beträgt und daß der Steg (31) wenigstens auf einer Seite mit einer Abrundung (32) in die U-Profilabschnitte (30) übergeht.

3. Arbeitsschutzvorrichtung nach Anspruch 1 oder 2,
**dadurch gekennzeichnet, daß**
das Gelenkstück (27) aus einem Elasto-Silan (Silikon-Kautschuk) besteht und daß die U-Profilabschnitte (30) flächenhaft mit den Teilstücken (25,26) der Arbeitschutzplatte (24) verklebt sind.

4. Arbeitsschutzvorrichtung nach einem der vorangehenden Ansprüche,
**dadurch gekennzeichnet, daß**
daß die Arbeitsschutzplatte (24) drei durch Gelenkstücke (27) verbundene Teilstücke (25,26) aufweist und daß die abgewinkelten Führungschienen (35) vier winklig zueinander stehende Abschnitte (36,40,41,42) umfassen, derart, daß bei in das Schaltfeld (1) eingeführter Arbeitsschutzplatte (24) sich das eine Gelenkstück (27) nahe dem Übergang von dem ersten Abschnitt (26) zu dem zweiten Abschnitt (40) und das weitere Gelenkstück (27) im Bereich des dritten Abschnittes (41) befindet.

5. Arbeitsschutzvorrichtung nach Anspruch 4,
**dadurch gekennzeichnet, daß**
das eine (26) der Teilstücke (25,26) der Arbeitsschutzplatte (24) aus Metall besteht und seitlich überstehende Anschlagnasen (60,61) zur Abstützung an der Bedienungsfront (17) des Schaltfeldes (1) besitzt, wobei die eine der Anschlagnasen (61) eine Schließnase (62) mit einer Aufnahmeöffnung (63) für ein Sperrorgan aufweist.

6. Arbeitsschutzvorrichtung nach Anspruch 4,
**dadurch gekennzeichnet, daß**
die Abschnitte (36,40,41,42) der abgewinkelten Führungsschiene (35) ein symmetrisches I-Profil mit örtlich derart angepaßter Weite w der Führungsschenkel (39) besitzen, daß das mittlere Teilstück (25) der Arbeitsschutzplatte (24) durch den Knick am Übergang von dem zweiten Abschnitt (40) der abgewinkelten Führungschiene (35) zu dem dritten Abschnitt (41) unterstützt wird.

7. Arbeitsschutzvorrichtung nach einem der vorangehenden Ansprüche,
**dadurch gekennzeichnet, daß**
die Führungsschienen (35) einstückig hergestellte Kunststoff-Formteile mit einer für die größte Tiefe einer Baureihe von Schaltfeldern (1) bemessenen Tiefe sind, wobei wenigstens eine eingeformte Markierung (49) für die einem Schaltfeld (1) mit geringerer Tiefe entsprechende Abmessung vorhanden ist.

8. Arbeitsschutzvorrichtung nach einem der vorangehenden Ansprüche,
**dadurch gekennzeichnet, daß**
die geraden Führungschienen (38) Bestandteil einer in dem Schaltfeld (1) an die Einführungsöffnung (23) für die Arbeitsschutzplatte (24) anschließend montierbaren, aus Stahlblech bestehenden Führungskassette (34) sind, die Scharniergelenke (46) für eine die frontseitige Einführungsöffnung (23) verdeckende und zum Öffnen und Schließen schwenkbare Verschlußklappe (22) besitzt.

9. Arbeitsschutzvorrichtung nach Anspruch 8,
**dadurch gekennzeichnet, daß**
die Führungskassette (34) eine im Führungsweg schwenkbar angeordnete und beim Einführen der Arbeitsschutzplatte (24) gegen Federkraft umlegbare Schutzklappe (50) enthält.

10. Arbeitsschutzvorrichtung nach Anspruch 9,
**dadurch gekennzeichnet, daß**
an der Schutzklappe (50) wenigstens eine Rolle (53) angebracht ist, die beim Einführen der Arbeitsschutzplatte (24) mit dieser zusammenwirkt.

11. Arbeitsschutzvorrichtung nach Anspruch 8,
**dadurch gekennzeichnet, daß**
die in der Führungskassette (34) enthaltenen geraden Führungsschienen (37) zur Auflage der Arbeitsschutzplatte (24) über die rückseitige Öffnung der Führungskassette (34) mit einer Abwinklung (57) überstehend angeordnet sind und daß der obere rückseitige Rand der Führungskassette (34) eine entgegengesetze Abwinklung (56) besitzt, wobei die Maulweite der Abwinklungen (56,57) der inneren Weite w der Führungsschenkel (39) der abgewinkelten Führungsschienen entsprechend bemessen ist.

## Claims

1. Operation-protection device for an electrical switchpanel (1), having an insertably and withdrawably arranged unit (7) and having isolating contacts (11, 12) arranged in a stationary fashion in the switchpanel (1) as well as movable isolating contacts (8, 9) arranged on the unit (7), having the following features:
- an operation-protection plate (24) comprising interjointed segments (25, 26),
- an insertion opening (23) arranged on the operating face (17) of the switchpanel (1), for the operation-protection plate (24),
- guide means (34, 35), which adjoin the insertion opening (23), grip the side edges of the operation-protection plate (23) by means of guide limbs (39) arranged at a mutual spacing, and comprising straight guide rails (37), which extend approximately over the depth of the unit (7), and angular guide rails (35), which adjoin the straight guide rails (37) and are of such a length and configuration that the operation-protection plate (24) can be inserted between the stationary and movable isolating contacts (11, 12; 8, 9), characterized by the following features:
- the jointed connection of the segments (25, 26) of the operation-protection plate (24) is formed by a single-piece elastomeric joining piece (27) which overlaps the ends of the segments (25, 26) to be connected,
- for each of the segments (25, 26) to be connected, the joining piece (27) has a U-profile section (30) and an uninterrupted web (31), which forms the jointed connection and extends over the entire width of the segments (25, 26).

2. Operation-protection device according to Claim 1, characterized in that the thickness of the web (31) is only a portion of the thickness of the joining piece (27), and in that the web (31) merges into the U-profile sections (30) by means of a round portion (32), at least on one side.

3. Operation-protection device according to Claim 1 or 2, characterized in that the joining piece (27) comprises an elastomeric silane (silicone rubber), and in that the U-profile sections (30) are bonded area-wise to the segments (25, 26) of the operation-protection plate (24).

4. Operation-protection device according to one of the preceding claims, characterized in that the operation-protection plate (24) has three segments (25, 26) connected by joining pieces (27), and in that the angular guide rails (35) comprise four sections (36, 40, 41, 42) at an angle to one another in such a way that with the operation-protection plate (24) inserted into the switchpanel (1) one joining piece (27) is located near the transition from the first section (26) to the second section (40) and the further joining piece (27) is located in the region of the third section (41).

5. Operation-protection device according to Claim 4, characterized in that one (26) of the segments (25, 26) of the operation-protection plate (24) comprises metal and has laterally projecting stop tabs (60, 61) for support on the operating face (17) of the switchpanel (1), one of the stop tabs (61) having a closing tab (62) with a receiving opening (63) for a blocking member.

6. Operation-protection device according to Claim 4, characterized in that the sections (36, 40, 41, 42) of the angular guide rail (35) have a symmetrical I-profile with a width w of the guide limbs (39) adapted locally in such a way that the middle segment (25) of the operation-protection plate (24) is supported by the bend at the transition from the second section (40) of the angular guide rail (35) to the third section (41).

7. Operation-protection device according to one of the preceding claims, characterized in that the guide rails (35) are moulded-plastic components produced as single pieces and having a depth dimensioned for the greatest depth of a range of switchpanels (1), there being at least one integral marking (49) for the dimension corresponding to a switchpanel (1) of lesser depth.

8. Operation-protection device according to one of the preceding claims, characterized in that the straight guide rails (38) are a component of a guide cassette (34), which comprises sheet steel, can be mounted adjoining the insertion opening (23) for the operation-protection plate (24) in the switchpanel (1), and has hinge joints (46) for a hinged cover (22) which covers the insertion opening (23) at the front and can be pivoted for the purpose of opening and closing.

9. Operation-protection device according to Claim 8, characterized in that the guide cassette (34) contains a protective cover (50) which is pivotably arranged in the guide path and can be shifted against a spring force upon insertion of the operation-protection plate (24).

10. Operation-protection device according to Claim 9, characterized in that at least one roller (53) is fitted on the protective cover (50) and interacts with the operation-protection plate (24) as the latter is inserted.

11. Operation-protection device according to Claim 8, characterized in that, for the purpose of placing the operation-protection plate (24) over the rear opening of the guide cassette (34), the straight guide rails (37) contained in the guide cassette (34) are arranged overhanging with a bent part (57), and in that the upper rear edge of the guide cassette (34) has an opposing bent part (56), the opening size of the bent parts (56, 57) being dimensioned to correspond to the inner width w of the guide limbs (39) of the angular guide rails.

## Revendications

1. Dispositif de protection du travail pour un tableau (1) électrique de connexion, comportant un appareil (7) qui est monté de manière à pouvoir être entré et sorti et des contacts (11,12) de séparation montés fixe dans le panneau (1) de connexion, ainsi que des contacts (8,9) de séparation mobiles montés sur l'appareil (7), ayant les caractéristiques suivantes:
- une plaque (24) de protection du travail constituée de pièces (25,26) partielles articulées l'une à l'autre,
- une ouverture (23) d'introduction de la plaque (24) de protection du travail ménagée sur le panneau (17) frontal de commande du tableau (1) de connexion,
- des moyens (34,35) de guidage qui font suite à l'ouverture (23) d'introduction, saisissant des branches (39) de guidage montées à distance l'une de l'autre, comprenant des rails (37) de guidage rectilignes, s'étendant à-peu-près sur la hauteur de l'appareil (7), et des rails (35) de guidage coudés, faisant suite aux rails (37) de guidage rectilignes, d'une longueur et d'une conformation telle que la plaque (24) de protection du travail peut être introduite entre les contacts (11,12) de séparation fixe et les contacts (8,9) de séparation mobile, caractérisé par les caractéristiques supplémentaires suivantes:
- l'articulation des pièces (25,26) partielles de la plaque (24) de protection du travail est formée par une pièce (27) d'articulation en élastomère d'un seul tenant, qui empiète sur les extrémités des pièces (25,26) partielles à relier,
- la pièce (27) d'articulation a pour chacune des pièces (25,26) partielles à relier un tronçon (30) profilé en forme de U et une barrette (31) continue, formant l'articulation et s'étendant sur toute la largeur des pièces (25,26) partielles.

2. Dispositif de protection du travail suivant la revendication 1, caractérisé en ce que l'épaisseur de la barrette (31) ne correspond qu'à une partie de l'épaisseur de la pièce (27) d'articulation et en ce que la barrette (31) devient, d'au moins un côté, par un arrondi (32), les tronçons (30) profilés en U.

3. Dispositif de protection du travail suivant la revendication 1 ou 2, caractérisé en ce que la pièce (27) d'articulation est en élasto-silane (caoutchouc ou silicone) et en ce que les tronçons (30) profilés en U sont collés sur une surface aux pièces (25,26) partielles de la plaque (24) de protection du travail.

4. Dispositif de protection du travail suivant l'une des revendications précédentes,
caractérisé en ce que la plaque (24) de protection du travail comporte trois pièces (25,26) partielles reliées par des pièces (27) d'articulation et en ce que les rails (35) de guidage coudés comprennent quatre tronçons (36,40,41,42) qui font un angle l'un avec l'autre, de telle manière que l'une (27) des pièces d'articulation se trouvent à proximité de la transition du premier tronçon (27) au deuxième tronçon (40) et que la pièce (27) articulée supplémentaire se trouve dans la zone du troisième tronçon (41).

5. Dispositif de protection du travail suivant la revendication 4, caractérisé en ce que l'une (26) des pièces (25,26) partielles de la plaque (24) de protection du travail est en métal et a des becs (60,61) de butée en saillie latéralement pour prendre appui sur le panneau (17) frontal de commande du tableau (1) de connexion, l'un (61) des becs de butée comportant un bec (62) de fermeture ayant une ouverture (63) de réception d'un élément de blocage.

6. Dispositif de protection du travail suivant la revendication 4, caractérisé en ce que les tronçons (36,40,41,42) du rail (35) de guidage coudé ont un profil symétrique en forme de I ayant une largeur w adaptée aux branches (39) de guidage de manière localisée de sorte que la pièce (25) partielle médiane de la plaque (24) de protection du travail est soutenue par la courbure à la transition du deuxième tronçon (40) du rail (35) de guidage coudé au troisième tronçon (41).

7. Dispositif de protection du travail suivant l'une des revendications précédentes, caractérisé en ce que les rails (35) de guidage sont des pièces moulées en matière plastique d'un seul tenant, ayant une profondeur prévue pour la plus grande profondeur d'une série de tableaux (1) de connexion, au moins un repère (49) moulé étant prévu pour la dimension correspondant à un tableau (1) de connexion de profondeur plus petite.

8. Dispositif de protection du travail suivant l'une des revendications précédentes, caractérisé en ce que les rails (38) de guidage rectilignes font partie d'une cassette (34) de guidage qui peut être montée dans le tableau (1) de connexion à la suite de l'ouverture (23) d'introduction de la plaque (24) de protection du travail, qui est en tôle d'acier et qui a des articulations (46) à charnières pour un volet (22) de fermeture masquant l'ouverture (23) d'introduction frontale et basculant pour l'ouverture et la fermeture.

9. Dispositif de protection du travail suivant la revendication 8, caractérisé en ce que la cassette (34) de guidage contient un volet (50) de protection monté basculant dans la voie de guidage et pouvant être rabattu à l'encontre de la force d'un ressort lors de l'introduction de la plaque (24) de protection du travail.

10. Dispositif de protection du travail suivant la revendication 9, caractérisé en ce qu'il est monté sur le volet (50) de protection au moins un galet (53) qui coopère avec la plaque (24) de protection du travail lors de son introduction.

11. Dispositif de protection du travail suivant la revendication 8, caractérisé en ce que les rails (37) de guidage rectilignes, contenus dans la cassette (34) de guidage, sont montés, pour soutenir la plaque (24) de protection du travail, de manière à faire saillie par un coude (57) au-dessus de l'ouverture ménagée sur la face arrière de la cassette (34) de guidage et en ce que le bord arrière supérieur de la cassette (34) de guidage a un coude (56) en sens contraire, l'ouverture des coudes (56,57) ayant une dimension correspondant à la largeur w intérieure des branches (39) de guidage des rails de guidage coudés.
